# EUROPEAN PATENT APPLICATION

(11) **EP 4 657 008 A1**
(43) Date of publication of application: **03.12.2025**
(21) Application number: 25179724.7
(22) Date of filing: 29.05.2025
(51) Int. Cl.: G01B 7/14, G01B 5/00, F01D 11/24

(54) **COOLING FOR CAPACITANCE PROBE CENTER CONDUCTOR**

(30) Priority: 30.05.2024 US 202418679151
(71) Applicant: RTX Corporation, Farmington, CT 06032 (US)
(72) Inventor: WARREN, Eli, Bend, 97703-8475 (US); HACKETT, Bryan James, Berlin, 06037 (US); HARRINGTON, Patrick M., Niantic, 06357 (US); DREGER, Edward F., Burlington, 06013 (US)
(74) Representative: Dehns

(57) **Abstract**

A capacitance probe for measuring clearances within a gas turbine engine includes a center conductor (102; 402; 702) having a face (112; 412; 712) that is exposed to a high temperature source of the gas turbine engine, a connection line (126...726) connected to the center conductor (102...702). A probe housing (104; 404; 704) surrounds the center conductor (102...702), the connection line (126; 426; 726) and the connection circuitry (124; 424; 724). The probe housing (104; 404; 704) defines an opening for exposing the face (112; 412; 712) of the center conductor (102; 402; 702) to the high temperature source of the gas turbine engine. The probe housing (104; 404; 704) and the center conductor (102; 402; 702) define at least one cooling channel (106; 406; 706; 114; 414; 714) that passes through the center conductor (102; 402; 702) to provide cooling air from a cool air source to the high temperature source to provide cooling to the face (112; 412; 712) of the center conductor (102; 402; 702).

## Description

### TECHNICAL FIELD

This disclosure relates generally to cooling of a capacitance probe in high temperature environments. More specifically, this disclosure relates to cooling of the center conductor of a capacitance probe in high temperature environments.

### BACKGROUND

Most development engine programs require obtaining blade tip clearance (BTC) data in hot sections of the engine, i.e., post-combustion turbine stages. Most capacitance based BTC probes are limited to 2270°F (1243°C) (GadCap) due to material capabilities. Most current probe cooling arrangements include flutes or holes around the circumference of the capacitance probe housing to enable cool HPC (high pressure compressor) air to flow from the backside of the blade outer air seal (BOAS) to the gas path thereby cooling the probe housing. However, some probe assemblies include at least one annulus ring of electrical insulator that is necessary for electrical performance that will also act as a thermal insulator. This insulation prevents the necessary heat transfer from the center conductor, which is exposed to the same hot gas path as the probe housing, to the cooled probe housing. Thus, the center conductor is much closer to the gas path temperature than the temperature of the probe housing. This thermal gradient decreases potential use of a traditionally cooled probe. Additionally, the elevated temperature of the center conductor increases the likelihood of debris within the gas path being deposited on the face of the center conductor which can cause electrical performance degradation.

### SUMMARY

This disclosure relates to cooling a capacitance probe center conductor.

One general aspect of the present invention includes a capacitance probe for operating in high temperature environments. The capacitance probe also includes a center conductor having a face that is exposed to a high temperature source; a connection line connected to the center conductor; a probe housing surrounding the center conductor, the connection line and the connection circuitry, the probe housing defining an opening for exposing the face of the center conductor to the high temperature source; and where the probe housing and the center conductor define at least one cooling channel that passes through the center conductor to provide cooling air from a cool air source to the high temperature source to provide cooling to the face of the center conductor.

Implementations may include one or more of the following features.

In an embodiment of the above, the center conductor and the probe housing further may include: where the center conductor and the probe housing define a horizontal channel that runs substantially parallel to the face of the face of the center conductor; where the probe housing further defines a first vertical channel interconnecting the cool air source at a top of the probe housing to the horizontal channel and defines a second vertical channel interconnecting the horizontal channel to the high temperature source; and where the first vertical channel, the horizontal channel and the second vertical channel enables the cooling air to flow from the cool air source to the high temperature source through the horizontal channel to cool the face of the center conductor.

In an embodiment according to any of the previous embodiments, the horizontal channel further defines an opening on a side of the probe housing; and a plug for closing the opening on the side of the probe housing to prevent the cooling air from flowing out of the opening in the probe housing.

In an embodiment according to any of the previous embodiments, the center conductor and the probe housing further may include: where the center conductor and the probe housing define a horizontal channel that runs substantially parallel to the face of the face of the center conductor; where the probe housing further defines a first vertical channel interconnecting the cool air source at a top of the probe housing to the horizontal channel; where the center conductor defines a second vertical channel interconnecting the horizontal channel to the face of the center conductor; and where the first vertical channel, the horizontal channel and the second vertical channel enables the cooling air to flow from the cool air source to the face of the center conductor to cool the face of the center conductor.

In an embodiment according to any of the previous embodiments, the second vertical channel is offset from a center of the face of the center conductor.

In an embodiment according to any of the previous embodiments, the capacitance probe further includes an electrical insulator separating the center conductor from the probe housing, wherein the electrical insulator further includes openings through which at least one cooling channel passes.

In an embodiment according to any of the previous embodiments, the capacitance probe further includes a first electrical insulator located next to the center conductor, a second electrical insulator located next to the probe housing and a guard conductor located between the first electrical insulator and the second electrical insulator, wherein the first electrical insulator, the second electrical insulator and the guard conductor further includes openings through which the at least one cooling channel passes.

In an embodiment according to any of the previous embodiments, the at least one cooling channel may include a plurality of cooling channels, each of the plurality of cooling channels are equally separated around the probe housing.

Another general aspect of the present invention includes a capacitance probe for measuring clearances within a gas turbine engine. The capacitance probe also includes a center conductor having a face that is exposed to a gas-path of the gas turbine engine; a connection line connected to the center conductor; a probe housing surrounding the center conductor, the connection line and the connection circuitry, the probe housing defining an opening for exposing the face of the center conductor to the gas-path of the gas turbine engine; where the center conductor and the probe housing define at least one horizontal channel that runs substantially parallel to the face of the face of the center conductor; where the probe housing further defines at least one first vertical channel interconnecting a cool air source to provide cooling air at a top of the probe housing to the at least one horizontal channel and defines at least one second vertical channel interconnecting the at least one horizontal channel to the gas-path; and where the at least one first vertical channel, the at least one horizontal channel and the at least one second vertical channel enables the cooling air to flow from the cool air source to the gas-path through the horizontal channel to cool the face of the center conductor.

Implementations may include one or more of the following features.

In an embodiment of the above, the capacitance probe may include where each of the at least one horizontal channel further define an opening on a side of the probe housing; and a plug for closing the opening on the side of the probe housing to prevent the cooling air from flowing out of the opening in the probe housing.

In an embodiment according to any of the previous embodiments, the capacitance probe further includes an electrical insulator separating the center conductor from the probe housing, wherein the electrical insulator further includes openings through which the horizontal channel passes.

In an embodiment according to any of the previous embodiments, the capacitance probe includes a first electrical insulator located next to the center conductor, a second electrical insulator located next to the probe housing and a guard conductor located between the first electrical insulator and the second electrical insulator, wherein the first electrical insulator, the second electrical insulator and the guard conductor further includes openings through which the horizontal channel passes.

In an embodiment according to any of the previous embodiments, the at least one first vertical channel and the at least on second vertical channel are equally separated around the probe housing.

A further general aspect of the present invention includes a method for cooling a capacitance probe for measuring clearances within a gas turbine engine. The method also includes defining at least one cooling channel that passes through a center conductor and a probe housing of the capacitance probe; and providing cooling air from a cool air source to a high temperature source through at least one channel to provide cooling to a face of the center conductor of the capacitance probe.

Implementations may include one or more of the following features.

In an embodiment of the above, the step of defining the at least one cooling channel further may include: defining a horizontal channel within the center conductor that runs substantially parallel to the face of the face of the center conductor; defining a first vertical channel within the probe housing interconnecting the cool air source at a top of the probe housing to the horizontal channel; and defining a second vertical channel within the probe housing interconnecting the horizontal channel to the high temperature source.

In an embodiment according to any of the previous embodiments, the step of providing further may include providing the cooling air to flow from the cool air source to the high temperature source through the first vertical channel, the horizontal channel and the second vertical channel to cool the face of the center conductor.

In an embodiment according to any of the previous embodiments, the step of defining further may include: defining a horizontal channel within the center conductor and the probe housing that runs substantially parallel to the face of the face of the center conductor; defining a first vertical channel within the probe housing interconnecting the cool air source at a top of the probe housing to the horizontal channel; and defining a second vertical channel within the center conductor interconnecting the horizontal channel to the face of the center conductor.

In an embodiment according to any of the previous embodiments, the step of providing further may include providing cooling air to flow from the cool air source to the face of the center conductor to cool the face of the center conductor.

In an embodiment according to any of the previous embodiments, the step of defining further may include defining a plurality of cooling channels; and equally separating each of the plurality of cooling channels around the probe housing.

In an embodiment according to any of the previous embodiments, the method may include preventing the cooling air from flowing out of an opening defined on a side of the probe housing using a plug to close the opening.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following description taken in conjunction with the accompanying drawings, in which like reference numerals represent like parts:
Fig. 1 illustrates a cross-sectional view of a capacitance probe that implements a cooling system;
Fig. 2 illustrates a top view of a capacitance probe implementing the cooling system;
Fig. 3 illustrates a bottom view of a capacitance probe implementing the cooling system;
Fig. 4 illustrates a cross-sectional view of an alternative embodiment of a capacitance probe that implements a cooling system;
Fig. 5 illustrates a top view of the alternative embodiment of the capacitance probe implementing the cooling system;
Fig. 6 illustrates a bottom view of the alternative embodiment of the capacitance probe implementing the cooling system; and
Fig. 7 illustrates a cross-sectional view of an alternative embodiment of a triaxial capacitance probe implementing the cooling system

### DETAILED DESCRIPTION

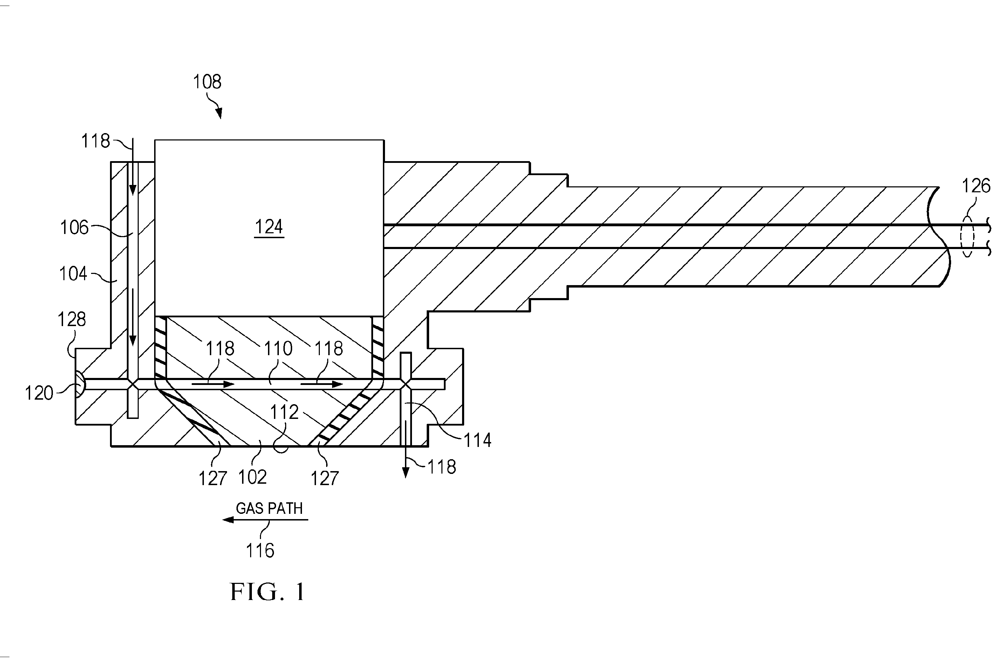

Figs. 1 through 7, described below, and the various embodiments used to describe the principles of the present disclosure are by way of illustration only and should not be construed in any way to limit the scope of this disclosure. Those skilled in the art will understand that the principles of the present disclosure may be implemented in any type of suitably arranged device or system.

Fig. 1 illustrates a cross-sectional view of a capacitance probe including a system for cooling the center conductor 102. The center conductor 102 includes the probe face 112. The probe housing 104 includes a channel 106 that feeds cooling air from the backside 108 down to a cross-drilled horizontal channel 110 that carries cooling air through the center conductor 102 near the face 112 of the of the center conductor. The cooling air then exits a channel 114 into the gas path 116. By providing the cooling air indicated generally by arrows 118, the center conductor 102 may be kept much cooler than by cooling only the housing 104 of the probe. The flow of the cooling air from the backside 108 to the gas path 116 is facilitated by the greater pressure in the backside relative to the gas path. The channels 106, 110 and 114 can be machined at the detail part level prior to assembly and then aligned during probe assembly. Alternatively, the channels 106, 110 and 114 may be drilled in in the probe housing 104 after assembly. The exposed access to the probe housing 104 can use a plug weld 120 to control airflow towards the gas path 116. Other means of plugging the hole may also be utilized.

The placement of the cooling horizontal channel 110 near the conductor face 112 of the center conductor 102 provides a number of benefits over existing systems that only cool the probe housing 104. Cooling to the probe face 112 enables existing probe designs having the described cooling channels added thereto to operate at higher temperatures than they were previously able to operate. Better cooling to the center conductor face 112 decreases the risk of contamination of the face of the probe from debris within the gas path. The cooling channels comprise a relatively inexpensive method of enabling higher temperature uses of existing probes since the capacitance probe need only have the channels created therein. Changes in the temperature capability of the capacitance probe do not cause an increase in the probe size and the proposed cooling geometry does not negatively impact the performance of the probe.

Referring now to Figs. 1-3, the capacitance probe housing 104 surrounds the center conductor 102 and connection circuitry 124. The connection circuitry 124 may comprise any type of circuitry for interconnecting the center conductor 102 with a connection line 126 passing through the probe housing 104. Connection line 126 provides the data monitored by the capacitance probe. The center conductor 102 is surrounded by electrical insulators 127 that provides thermal insulation between the center conductor 102 and the probe housing 104 that decreases heat transfer between the center conductor to the probe housing. As mentioned previously, the cooling path comprises a vertical channel 106 that passes through the probe housing 104 parallel to the center conductor 102 and the connection circuitry 124. The channel 106 provides an opening to the backside 108 to enable entry of the cooling air along the path shown by arrows 118. The vertical channel 106 interconnects with a horizontal channel 110 that passes through the housing 104 and the center conductor 102. The horizontal channel 110 enables the cooling air to pass in close proximity to the face 112 of the center conductor 102 and provide better cooling characteristics to the face 112 and center conductor 102 by enabling the cooling air to come in direct contact with the center conductor. By passing the cooling air directly through a horizontal channel 110 within the center conductor 102, the presence of insulators surrounding the center conductor 102 would not inhibit the thermal cooling affects like those in system where in cooling air passes only through the surrounding probe housing 104. The cooling air that has removed heat from the center conductor 102 then exits the probe housing 104 into the gas path 116 via a second vertical channel 114 providing an exit path for the cooling gases on a bottom side of the probe housing 104.

Drilling of the horizontal channel 110 in the probe housing 104 and center conductor 102 will leave an opening on a face 128 of the probe housing 104. The opening may be sealed to prevent the escape of cooling gases before they pass through the center conductor 102 by placing a plug weld 120 within the opening. Alternative forms of sealing the opening in face 128 may also be utilized such as a plug.

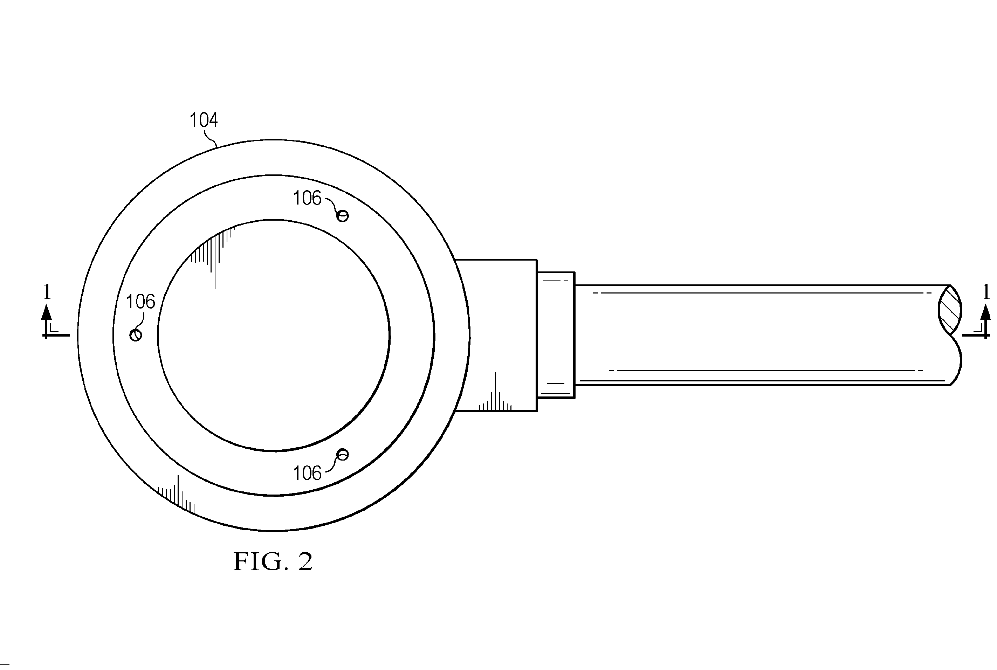

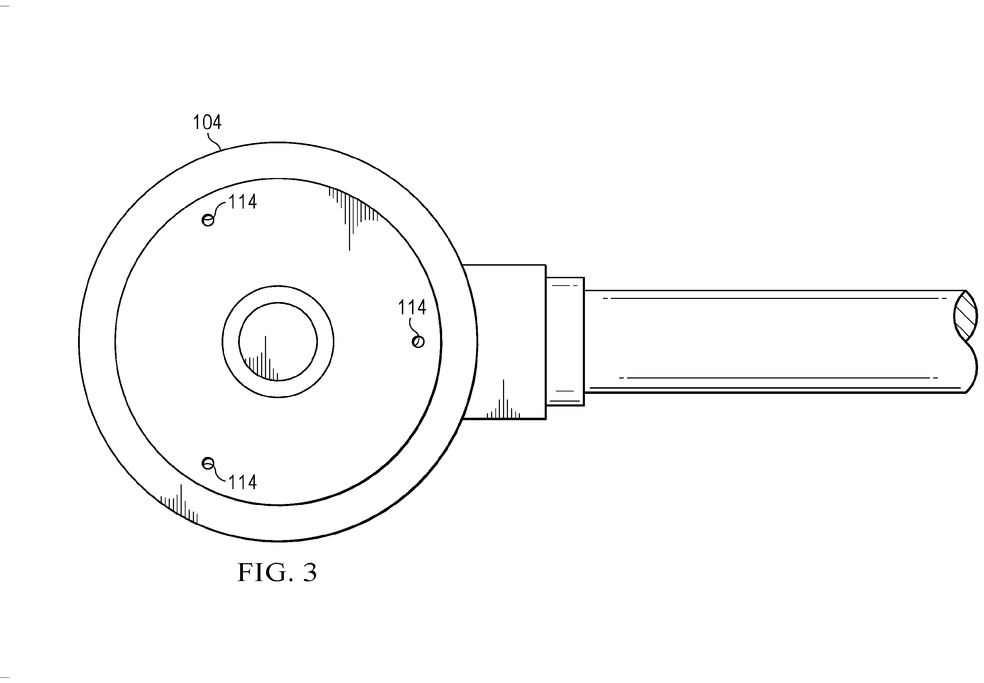

While Fig. 1 illustrates only a single cooling channel pathway through the probe housing 104 and center conductor 102, multiple cooling channel pathways may be provided within the probe housing 104 and center conductor 102 to provide improved cooling characteristics to the center conductor 102. Thus, as more particularly illustrated in Figs. 2 and 3, three sets of cooling channels may be used to provide cooling to the center conductor 102. While Figs. 2 and 3 illustrate the use of three sets of cooling channels, it should be realized that any number of cooling channels may be utilized in order to provide the needed degree of thermal cooling to the center conductor 102.

Fig. 2 illustrates a top view of the probe housing 104 having three separate| cooling channels 106 extending downward into the probe housing 104. The cooling vertical channels 106 are equally spaced around the top surface of the probe housing 104. If greater or fewer cooling vertical channels 106 were included these would also be equally spaced around the top surface of the probe housing 104.

Fig. 3 illustrates a bottom view of the probe housing 104 where in the three separate exit channels 114 are illustrated. Similar to the channels 106 defined within the top of the probe housing 104, the exit channels 114 are equally spaced about the bottom surface of the probe housing 104. In a similar manner, if fewer or greater exit channels 114 are provided these may also be equally spaced about the bottom surface of the probe housing.

As mentioned previously, the channels 106, 110 and 114 may be drilled into the probe after assembly or created during assembly. If the holes are created during manufacture prior to assembly, an alignment feature could be utilized such as a removable pin that inserts into the horizontal channel 110 in order to assure the channel within the housing 104 and the center conductor 102 are properly aligned.

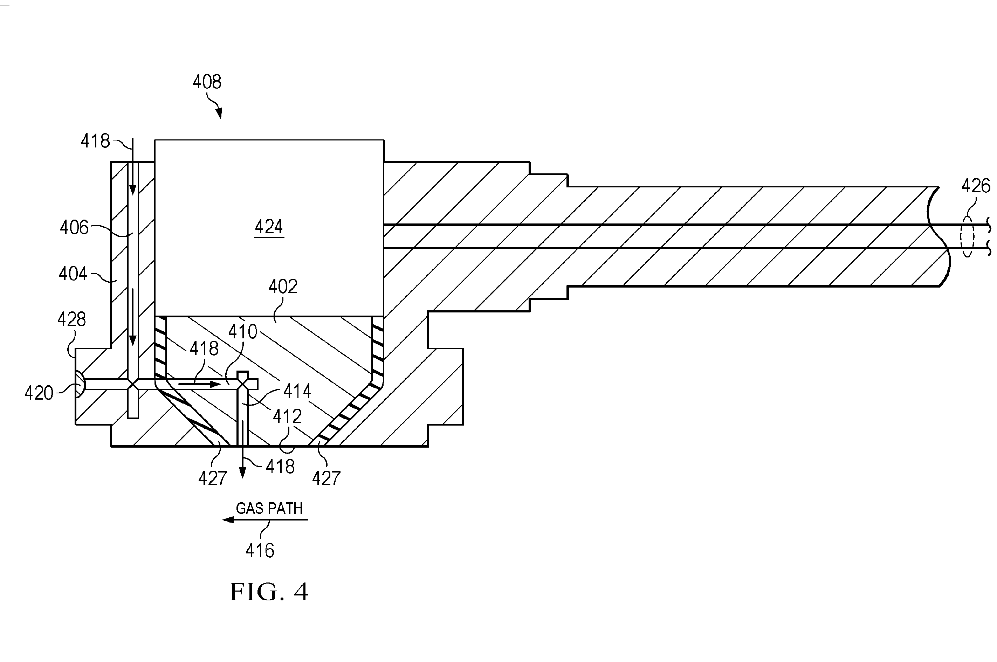

Referring now to Figures 4-6, rather than having the horizontal channel 410 extend completely through the center conductor 402 and exit into the gas path 416 from the probe housing 404, the exit channel could be located in the face 412 of the center conductor 402. The cross-sectional view of this is more particularly illustrated in Fig. 4. The capacitance probe housing 404 surrounds the center conductor 402 and connection circuitry 424. The connection circuitry 424 may comprise any type of circuitry for interconnecting the center conductor 402 with a connection line 426 passing through the probe housing 404. Connection line 426 provides the data monitored by the capacitance probe. The center conductor 402 is surrounded by electrical insulators 427 that provides thermal insulation between the center conductor 402 and the probe housing 404 that decreases heat transfer between the center conductor to the probe housing.

As mentioned previously, the cooling path comprises a vertical channel 406 that passes through the probe housing 404 parallel to the center conductor 402 and the connection circuitry 424. The channel 406 provides an opening to the backside 408 to enable entry of the cooling air along path 418. The vertical channel 406 interconnects with a horizontal channel 410 that passes through the housing 404 and the center conductor 402 to a point within the interior of the center conductor. Unlike the embodiment of the horizontal channel 110 of Fig. 1, the horizontal channel 410 does not pass completely through the center conductor 402 but to a point slightly offset from the center of the center conductor. A second vertical channel 414 is also defined within the center conductor 402 that interconnects the horizontal channel 410 with an opening provided on the face 412 of the center conductor. The horizontal channel 410 and vertical channel 414 enables the cooling air to pass directly to the face 412 of the center conductor 402 and provide better cooling characteristics to the face 412 and center conductor 402 by enabling the cooling air to come in direct contact with the center conductor and face. By passing the cooling air directly through a horizontal channel 410 within the center conductor 402, the presence of electrical insulators 427 surrounding the center conductor 402 would not inhibit the thermal cooling affects like those in system wherein cooling air passes only through the surrounding probe housing 404. The cooling air that has removed heat from the center conductor 402 and face 412 then exits the center conductor into the gas path 416 via the second vertical channel 414 providing an exit path for the cooling gases on a bottom side of the probe housing 404 through the center conductor 402.

Drilling of the horizontal channel 410 in the probe housing 404 and center conductor 402 will leave an opening on a face 428 of the probe housing 404. The opening may be sealed to prevent the escape of cooling gases before they pass through the center conductor 402 by placing a plug weld 420 within the opening. Alternative forms of sealing the opening in face 428 may also be utilized such as a plug.

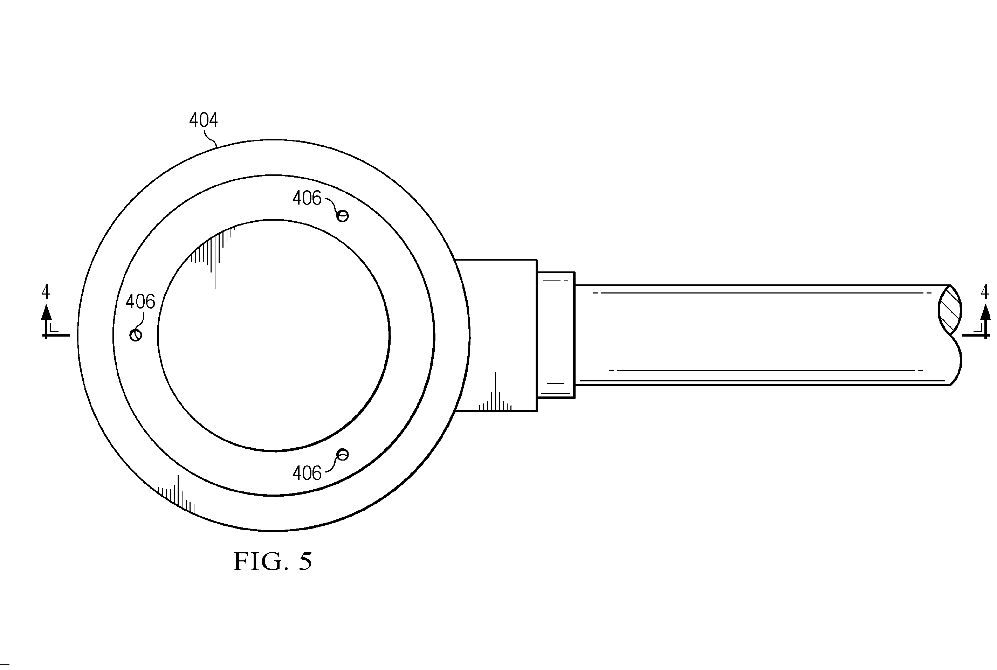

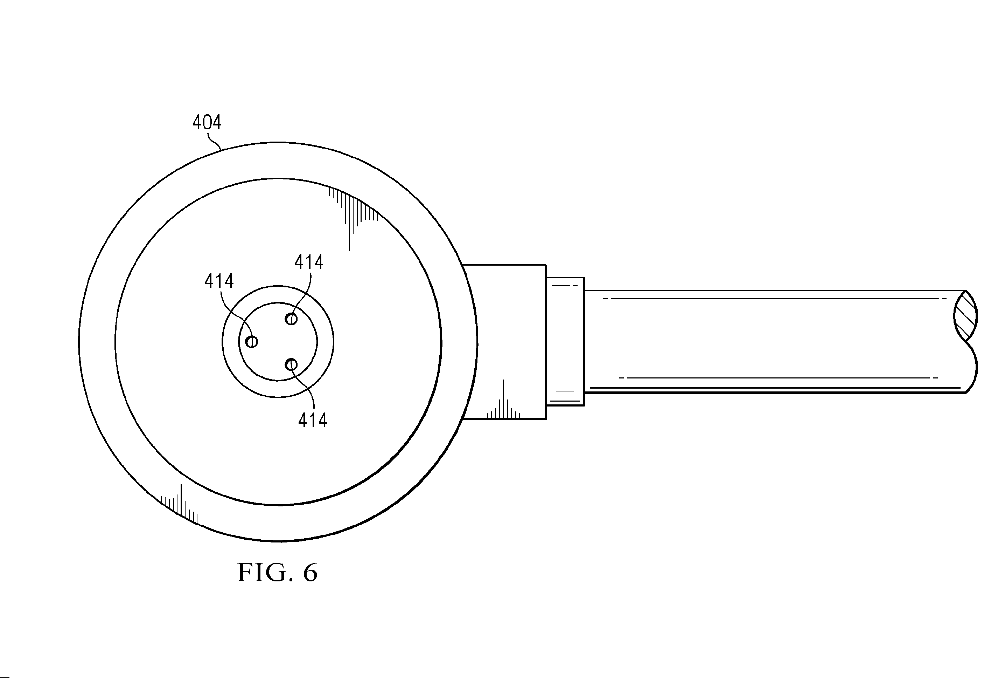

While Fig. 4 illustrates only a single cooling channel pathway through the probe housing 404 and center conductor 402, multiple cooling channel pathways may be provided within the probe housing 404 and center conductor 402 to provide improved cooling characteristics to the center conductor 402. Thus, as more particularly illustrated in Figs. 5 and 6, three sets of cooling channels may be used to provide cooling to the center conductor 402. While Figs. 5 and 6 illustrate the use of three sets of cooling channels, it should be realized that any number of cooling channels may be utilized in order to provide the needed degree of thermal cooling to the center conductor 402.

Fig. 5 illustrates a top view of the probe housing 404 having three separate| cooling channels 406 extending downward into the probe housing 404. The cooling channels 406 are equally spaced around the top surface of the probe housing 404. If greater or fewer cooling channels 406 were included these would also be equally spaced around the top surface of the probe housing 404.

Fig. 6 illustrates a bottom view of the probe housing 404 where in the three separate exit vertical channels 414 within the face 412 of the center conductor 402 are illustrated. Similar to the channels 406 defined within the top of the probe housing 404, the exit vertical channels 414 are equally spaced about the face 412 of the center conductor 402. In a similar manner, if fewer or greater exit vertical channels 414 are provided these may also be equally spaced about the bottom surface of the probe housing. Placement of the channels in the face 412 of the center conductor 402 require the center conductor to be slightly larger than if the vertical channels 414 were not present. Thus, this embodiment could be used in applications where the presence of a larger capacitive probe was not a problem.

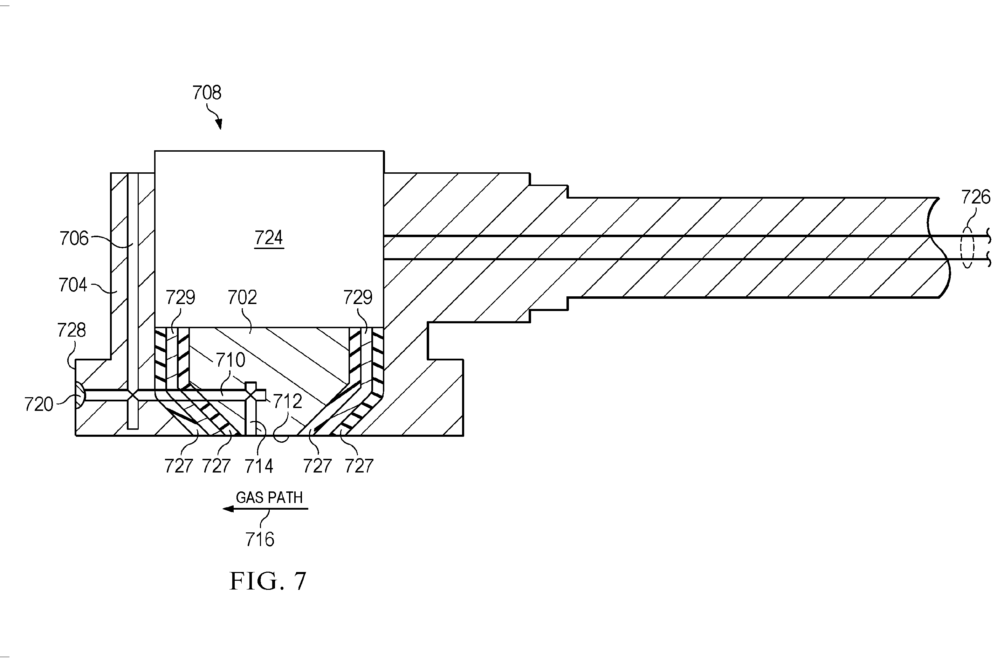

Referring now to Fig. 7, there is illustrated an embodiment implemented in a triaxial capacitive probe. The capacitance probe housing 704 surrounds the center conductor 702 and connection circuitry 724. The connection circuitry 724 may comprise any type of circuitry for interconnecting the center conductor 702 with a connection line 726 passing through the probe housing 704. Connection line 726 provides the data monitored by the capacitance probe. The center conductor 702 is surrounded by electrical insulators 727 that provides thermal insulation between the center conductor 702 and the probe housing 704 that decreases heat transfer between the center conductor to the probe housing. As mentioned previously, the cooling path comprises a vertical channel 706 that passes through the probe housing 704 parallel to the center conductor 702 and the connection circuitry 724. The vertical channel 706 provides an opening to the backside 708 to enable entry of the cooling air along path 718. The vertical channel 706 interconnects with a horizontal channel 710 that passes through the housing 704 and the center conductor 702 to a point within the interior of the center conductor. Unlike the embodiment of the horizontal channel 110 of Fig. 1, the horizontal channel 710 does not pass completely through the center conductor 702 but to a point slightly offset from the center of the center conductor. A second vertical channel 714 is also defined within the center conductor 702 that interconnects the horizontal channel 710 with an opening provided on the face 712 of the center conductor. The horizontal channel 710 and vertical channel 714 enables the cooling air to pass directly to the face 712 of the center conductor 702 and provide better cooling characteristics to the face 712 and center conductor 702 by enabling the cooling air to come in direct contact with the center conductor and face. By passing the cooling air directly through a horizontal channel 710 within the center conductor 702, the presence of electrical insulators 727 and guard conductor 729 surrounding the center conductor 702 would not inhibit the thermal cooling affects like those in system wherein cooling air passes only through the surrounding probe housing 704. The cooling air that has removed heat from the center conductor 702 and face 712 then exits the center conductor into the gas path 716 via the second vertical channel 714 providing an exit path for the cooling gases on a bottom side of the probe housing 704 through the center conductor 702.

Drilling of the horizontal channel 710 in the probe housing 704 and center conductor 702 will leave an opening on a face 728 of the probe housing 704. The opening may be sealed to prevent the escape of cooling gases before they pass through the center conductor 702 by placing a plug weld 720 within the opening. Alternative forms of sealing the opening in face 728 may also be utilized such as a plug.

While Fig. 7 illustrates only a single cooling channel pathway through the probe housing 704 and center conductor 702, multiple cooling channel pathways may be provided within the probe housing 704 and center conductor 702 to provide improved cooling characteristics to the center conductor 702. Thus, as described with respect to the above embodiments, a greater number of cooling channels may be used to provide cooling to the center conductor 702. Placement of the channels in the face 412 of the center conductor 402 require the center conductor to be slightly larger than if the vertical channels 414 were not present. Thus, this embodiment could be used in applications where the presence of a larger capacitive probe was not a problem.

Utilizing the above-described channel cooling system, capacitance probes may have their center conductors and associated faces more efficiently cooled by directly applying cooling air to the center conductor rather than merely passing cooling air through the probe housing as done in existing systems.

While the above description has been made with respect to a rotating fan structure, it will be appreciated by one skilled in the art that any type of rotating structure could utilize similar techniques and methods for measuring clearance between a rotating structure and a fixed structure in a similar fashion. Additionally, while the above description has been made with respect to detecting the rotation of nonmetallic objects past a fixed structure, the system may be utilized to detect clearances between rotating metallic structures in addition to those discussed previously with respect to the use of alterations to electric and magnetic fields.

It may be advantageous to set forth definitions of certain words and phrases used throughout this patent document. The term "couple" and its derivatives refer to any direct or indirect communication between two or more components, whether or not those components are in physical contact with one another. The terms "include" and "comprise," as well as derivatives thereof, mean inclusion without limitation. The term "or" is inclusive, meaning and/or. The phrase "associated with," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, have a relationship to or with, or the like. The phrase "at least one of," when used with a list of items, means that different combinations of one or more of the listed items may be used, and only one item in the list may be needed. For example, "at least one of: A, B, and C" includes any of the following combinations: A, B, C, A and B, A and C, B and C, and A and B and C.

The description in the present disclosure should not be read as implying that any particular element, step, or function is an essential or critical element that must be included in the claim scope. The scope of patented subject matter is defined only by the allowed claims. Use of terms such as (but not limited to) "mechanism," "module," "device," "unit," "component," "element," "member," "apparatus," "machine," "system," "processor," or "controller" within a claim is understood and intended to refer to structures known to those skilled in the relevant art, as further modified or enhanced by the features of the claims themselves.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the scope of this disclosure, as defined by the following claims.

## Claims

1. A capacitance probe for operating in high temperature environments, comprising:
a center conductor (102; 402; 702) having a face (112; 412; 712) that is exposed to a high temperature source;
a connection line (126; 426; 726) connected to the center conductor (102; 402; 702);
a probe housing (104; 404; 704) surrounding the center conductor (102; 402; 702) and the connection line (126; 426; 726), the probe housing (104; 404; 704) defining an opening for exposing the face (112; 412; 712) of the center conductor (102; 402; 702) to the high temperature source; and
wherein the probe housing (104; 404; 704) and the center conductor (102; 402; 702) define at least one cooling channel (106; 406; 706; 114; 414; 714) that passes through the center conductor (102; 402; 702) to provide cooling air from a cool air source to the high temperature source to provide cooling to the face (112; 412; 712) of the center conductor (102; 402; 702).

2. The capacitance probe of Claim 1, wherein:
the center conductor (102) and the probe housing (104) define a horizontal channel (110) that runs substantially parallel to the face of the face (112) of the center conductor (102);
the probe housing (104) further defines a first vertical channel (106) interconnecting the cool air source at a top of the probe housing (104) to the horizontal channel (110) and defines a second vertical channel (114) interconnecting the horizontal channel (110) to the high temperature source; and
the first vertical channel (106), the horizontal channel (110) and the second vertical channel (114) enable the cooling air to flow from the cool air source to the high temperature source through the horizontal channel (110) to cool the face (112) of the center conductor (102).

3. The capacitance probe of Claim 1, wherein:
the center conductor (402; 702) and the probe housing (404; 704) define a horizontal channel (410; 710) that runs substantially parallel to the face of the face (412; 712) of the center conductor (402; 702);
the probe housing (404; 704) further defines a first vertical channel (406; 706) interconnecting the cool air source at a top of the probe housing (404; 704) to the horizontal channel (410; 710);
the center conductor (402; 702) defines a second vertical channel (414; 714) interconnecting the horizontal channel (410; 710) to the face (412; 712) of the center conductor (402; 702); and
the first vertical channel (406; 706), the horizontal channel (410; 710) and the second vertical channel (414; 714) enable the cooling air to flow from the cool air source to the face (412; 728) of the center conductor (402; 702) to cool the face (412; 728) of the center conductor (402; 702).

4. The capacitance probe of Claim 3, wherein the second vertical channel (114; 414; 714) is offset from a center of the face (112; 412; 712) of the center conductor (102; 402; 702).

5. The capacitance probe of Claim 2, 3 or 4, further comprising:
wherein the horizontal channel (110; 410; 710) further defines an opening on a side of the probe housing (104; 404; 704); and
a plug (120; 420; 720) for closing the opening on the side of the probe housing (104; 404; 704) to prevent the cooling air from flowing out of the opening in the probe housing (104; 404; 704),
and/or wherein the at least one first vertical channel (106; 406; 706) and the at least one second vertical channel (114; 414; 714) are equally separated around the probe housing (104; 404; 704).

6. The capacitance probe of any preceding claim further including:
an electrical insulator (127; 427; 727) separating the center conductor (102; 402;702) from the probe housing (104; 404; 704); and
wherein the electrical insulator (127; 427; 727) further includes openings through which at least one cooling channel (106...714) passes.

7. The capacitance probe of any of claims 1 to 5 further including:
a first electrical insulator (727) located next to the center conductor (702);
a second electrical insulator (727) located next to the probe housing (704);
a guard conductor (729) located between the first electrical insulator (727) and the second electrical insulator (727); and
wherein the first electrical insulator (727), the second electrical insulator (727) and the guard conductor (729) further includes openings through which the at least one cooling channel (714) passes.

8. The capacitance probe of any preceding claim, wherein the at least one cooling channel (106...714) comprises a plurality of cooling channels (106...714), each of the plurality of cooling channels (106...714) are equally separated around the probe housing (104; 404; 704).

9. A method for cooling a capacitance probe for measuring clearances within a gas turbine engine, comprising:
defining at least one cooling channel (106; 406; 706; 114; 414; 714) that passes through a center conductor (102; 402; 702) and a probe housing (104; 404; 704) of the capacitance probe; and
providing cooling air from a cool air source to a high temperature source through the at least one cooling channel (106...714) to provide cooling to a face (112; 412; 712) of the center conductor (102; 402; 702) of the capacitance probe.

10. The method of Claim 9, wherein the step of defining the at least one cooling channel (106) further comprises:
defining a horizontal channel (110) within the center conductor (102) that runs substantially parallel to the face of the face (112) of the center conductor (102);
defining a first vertical channel (106) within the probe housing (104) interconnecting the cool air source at a top of the probe housing (104) to the horizontal channel (110); and
defining a second vertical channel (114) within the probe housing (104) interconnecting the horizontal channel (110) to the high temperature source.

11. The method of Claim 9, wherein the step of defining further comprises:
defining a horizontal channel (410 710) within the center conductor (402; 702) and the probe housing (404; 704) that runs substantially parallel to the face of the face (412; 712) of the center conductor (402; 702);
defining a first vertical channel (406; 706) within the probe housing (404; 704) interconnecting the cool air source at a top of the probe housing (404; 704) to the horizontal channel (410; 710); and
defining a second vertical channel (414; 714) within the center conductor (402; 702) interconnecting the horizontal channel (410; 710) to the face (412; 712) of the center conductor (402; 702).

12. The method of Claim 10 or 11, wherein the step of providing further comprises providing the cooling air to flow from the cool air source to the high temperature source through the first vertical channel (106; 406; 706), the horizontal channel (110; 410; 710) and the second vertical channel (114; 414; 714) to cool the face (112; 412; 712) of the center conductor (102; 402; 702).

13. The method of any of claims 9, 10 or 11, wherein the step of providing further comprises providing cooling air to flow from the cool air source to the face (412; 712) of the center conductor (402; 702) to cool the face (412; 712) of the center conductor (402; 702).

14. The method of any of claims 9 to 13, wherein the step of defining further comprises:
defining a plurality of cooling channels (106...714); and
equally separating each of the plurality of cooling channels (106...714) around the probe housing (104; 404; 704).

15. The method of any of claims 9 to 14, further comprising preventing the cooling air from flowing out of an opening defined on a side of the probe housing (104; 404; 704) using a plug (120; 420; 720) to close the opening.
